**Europäisches Patentamt**

**European Patent Office**

**Office européen des brevets**

(11) Veröffentlichungsnummer : **0 349 863 B1**

## (12) EUROPÄISCHE PATENTSCHRIFT

(45) Veröffentlichungstag der Patentschrift :
**10.06.92 Patentblatt 92/24**

(51) Int. Cl.⁵ : $G11B\ 23/087$, $G11B\ 23/113$

(21) Anmeldenummer : **89111539.6**

(22) Anmeldetag : **24.06.89**

(54) **Kassette für einen Bandaufzeichnungsträger, insbesondere ein Magnetband.**

(30) Priorität : **06.07.88 DE 8808630 U**

(43) Veröffentlichungstag der Anmeldung :
**10.01.90 Patentblatt 90/02**

(45) Bekanntmachung des Hinweises auf die
Patenterteilung :
**10.06.92 Patentblatt 92/24**

(84) Benannte Vertragsstaaten :
**BE CH DE FR GB IT LI NL**

(56) Entgegenhaltungen :
**DE-U- 8 712 577**
**US-A- 3 804 351**
**US-A- 4 640 473**

(73) Patentinhaber : **BASF Aktiengesellschaft**
**Carl-Bosch-Strasse 38**
**W-6700 Ludwigshafen (DE)**

(72) Erfinder : **Schoettle, Klaus**
**Bergstrasse 115**
**W-6900 Heidelberg (DE)**
Erfinder : **Schmidts, Kurt**
**Oberer Graben 1**
**W-7635 Schwanau (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 349 863 B1

## Beschreibung

Die Erfindung betrifft eine Kassette für einen Bandaufzeichnungsträger, insbesondere ein Magnetband, auf wenigstens einem Bandwickel in einem Kunststoff-Gehäuse und mit wenigstens einer mittels eines an der Innenfläche des Gehäuses angespritzten Zapfens, der den Lauf des Bandaufzeichnungsträgers wenigstens mitbestimmt, sowie ein Werkzeug zur Herstellung eines solchen Zapfens.

Im Falle derartiger angespritzter Zapfen in Kunststoff-Gehäusen sind die Zapfen nicht ohne weiteres in einer befriedigenden Vertikallage herstellbar, da z.B. Materialschwundeinflüsse beim Abkühlen des Kunststoffs eine Neigung jedes Zapfens bewirken.

Bei Achsen für bewegliche Bandführungselemente wie Führungsrollen, -hebel usw. ist die Vertikallage der Achsen jedoch zusammen mit den Toleranzen der Achsen selbst und der Bandführungselemente für die Bandführungsqualität und die Band-Kopf-Ausrichtung (wegen des Kopfspalt-Azimutwinkels) ausschlaggebend. Abweichungen von den Sollabmessungen sind auch infolge der zwangsläufigen Toleranzsummierungen Ursache für die Erhöhung des Drehmomentbedarfs (des Geräts) beim Kassetten-Betrieb sowie auch schon bei der Konfektionierung der Kassetten.

Aus der DE-GM 87 125 77 ist eine Bandführungsrolle bekannt, die auf einem am Kassettengehäuse angespritzten Achszapfen drehbar gelagert ist. Die als Hutrolle mit besonderen Achszapfen ausgeführte Bandführungsrollenanordnung ist zwar vorteilhaft zur Vermeidung der Laufgeräusche einsetzbar, gegen eine mangelnde Vertikal-Ausrichtung des Achszapfens aufgrund der Spritzgußherstellung sind jedoch keine Maßnahmen angegeben.

Die Erfindung hat sich die Aufgabe gestellt, die Vertikalausrichtung der Zapfen in Kunstoff-Kassettengehäusen, insbesondere der Achszapfen für bewegliche Bandführungselemente mit einfachen Mitteln zu verbessern und ein Verfahren zur Herstellung solcher Zapfen bereitzustellen.

Die Aufgabe wird erfindungsgemäß mit einer Kassette für einen Bandaufzeichnungsträger, insbesondere ein Magnetband, auf wenigstens einem Bandwickel in einem Kunststoff-Gehäuse und mit wenigstens einem an der Innenfläche des Gehäuses angespritzten Zapfen, der den Lauf des Bandaufzeichnungsträgers wenigstens mitbestimmt, dadurch gelöst, daß um den Fuß des Zapfens eine in bezug auf den Mittelpunkt des Zapfenfußes nicht zentral-symmetrisch angeordnete Materialanhäufung vorgesehen ist, zur vorherbestimmbaren Vertikalausrichtung des Zapfens in bezug auf die Innenfläche des Gehäuses.

Damit wird erreicht, daß der Zapfen durch stärkeren Materialschwund in einer Zone um seinen Fuß in eine vorbestimmte Richtung "gezogen" wird und so eine gewünschte Zapfen-Vertikalausrichtung voreinstellbar ist.

In zweckmäßiger Ausbildung kann der Zapfen ein Achszapfen für ein beweglich gelagertes Bandführungselement, insbesondere für eine drehbar gelagerte Bandführungsrolle sein.

In weiterer Ausgestaltung der Erfindung kann die Materialanhäufung als ringsegmentförmige Erhöhung oder Vertiefung an der Gehäuseinnenfläche ausgebildet sein. Dabei läßt sich die ringsegmentförmige Erhöhung/Vertiefung sehr einfach durch einen speziellen Werkzeugeinsatz beim Spritzgießen herstellen.

In weiterer Ausgestaltung der Erfindung, wenn der Zapfen mit Stützrippen versehen ist, können die Stützrippen um den Fuß des Zapfens mit ungleichem Volumen, insbesondere mit unterschiedlicher Dicke, ausgebildet sein.

Dadurch ist es auch möglich, beispielsweise Achszapfen für Hutrollen vertikalausgerichtet auszubilden.

Praktisch können die Stützrippen als mindestens drei Radialrippen ausgebildet sein, wovon die mittlere Rippe die größte Dicke aufweist.

Praktisch ausgebildet kann die teilringförmige Erhöhung im Winkelbereich von etwa 90° bis 270°, insbesondere von etwa 180°, um den Fuß des Zapfens angeordnet sein.

In zweckmäßiger Ausgestaltung kann die Ergänzung des Winkelbereichs als Vertiefung in der Gehäuse-Innenfläche ausgeformt sein.

Praktisch kann die Erhöhung/Vertiefung in bezug zur Innenfläche des Gehäuses eine Höhe bzw. Tiefe zwischen etwa 0,2 und 0,6 mm aufweisen.

Zur Herstellung erfindungsgemäßer Zapfen kommen zweckmäßig Werkzeug-Einsätze folgender Ausbildung zur Verwendung.

Ein Werkzeug-Einsatz für einen Zapfen der erfindungsgemäßen Kassette kann mit einer Längsbohrung und mit einer als Erhöhung bzw. Vertiefung ausgebildeten Stirnwand und drehbar um den Mittelpunkt des späteren Achszapfens und fixierbar ausgeführt sein.

Ein weiterer Werkzeug-Einsatz für einen Zapfen einer erfindungsgemäßen Kassette kann mit einer Längsbohrung für den Achszapfen ausgebildet sein, wobei die Stützrippen mit ungleichem Volumen durch entsprechende Nuten unterschiedlicher Größe an der Innenfläche der Längsbohrung des Werkzeug-Einsatzes ausbildbar sind und wobei der Werkzeug-Einsatz um die Mittelachse der Längsbohrung drehbar angeordnet und fixierbar ist.

Jeder Werkzeug-Einsatz ist außerdem mit einer radialen Kennzeichnung, z.B. einem Einschnitt ausgebildet, so daß der Werkzeug-Einsatz in vorherbestimmter Winkellage wiederholbar einzusetzen und fixierbar ist.

Mit einem erfindungsgemäßen Werkzeug-Einsatz ist es möglich, eine bewußte oder notwendige Achsschrägstellung zu realisieren.

Ausführungsbeispiele er Erfindung sind in der Zeichnung dargestellt und nachfolgend beschrieben. Es zeigen

Figur 1 eine Draufsicht einer Kompakt-Kassette mit Umlenkrollen auf Achszapfen

Figur 2 die Kassette mit den Achszapfen in Seitenansicht in Richtung A der Figur 1

Figur 3 einen ersten erfindungsgemäße Zapfen in Perspektive

Figur 4 einen zweiten erfindungsgemäßen Zapfen in Perspektive

Figur 5 einen Werkzeug-Einsatz für den erfindungsgemäßen Zapfen in Figur 4

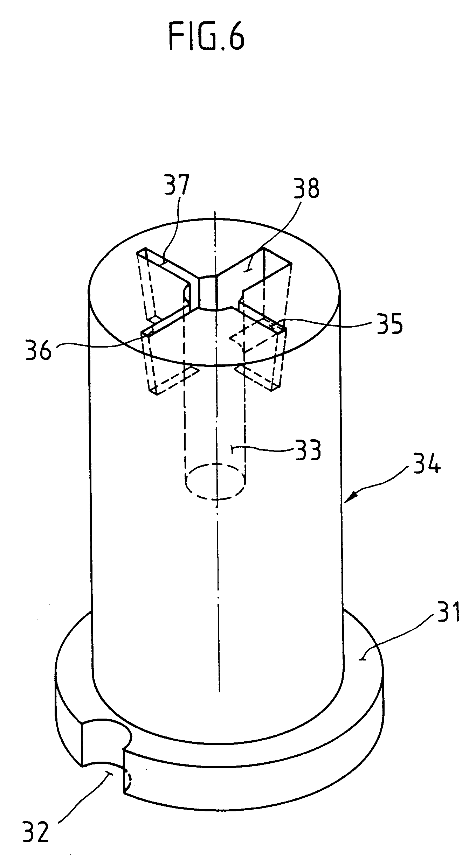

Figur 6 einen weiteren Werkzeug-Einsatz für den erfindungsgemäßen Zapfen in Figur 5

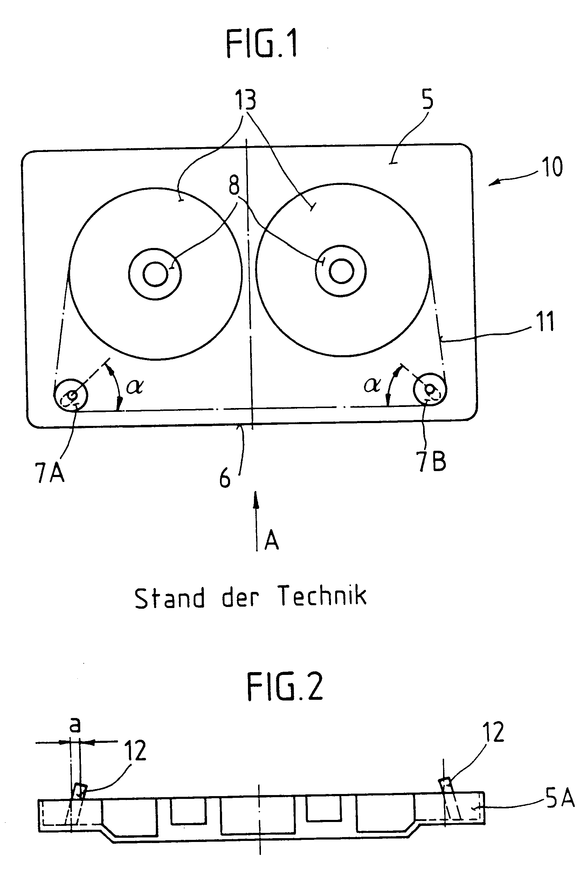

In Figur 1 ist eine Kassette 10, z.B. eine Kompakt-Kassette, mit zwei koplanaren, hier gleichgroßen Bandwickeln 13 Schematisch dargestellt. Außerdem weist die Kassette 10 noch ein Kassettengehäuse 5 mit einer Frontseite 6 sowie Umlenkrollen 7 für das Magnetband 11 auf. Die Umlenkrollen 7 sind auf integrierten, hier angespritzten Kunststoff-Mittelachszapfen 12 gelagert, die in Draufsicht (Figur 1) eine Neigung in die Richtung des jeweiligen Bandwickels im Winkel $\alpha$ von etwa 45° haben. Bei anderer Formgestaltung für die Kassettenteile sind andere Neigungswinkel zu erwarten.

In Figur 2 ist das Unterteil 5A des Kassettengehäuses 5 ohne die Umlenkrolle 7, jedoch mit Achszapfen 12, dessen Neigung gegenüber der Innenfläche des Kassettengehäuses 5 deutlich wird, gezeigt. Der seitliche Versatz a der Achszapfenspitze in Istlage gegenüber der Sollage (Vertikalen) beträgt gemäß dem Stand der Technik, ohne daß weitere Maßnahmen getroffen sind, etwa 40 bis 50 µm. Der verwendete Kunststoff ist das schlagfeste Polystyrol 427 D (ein Styrolbutadien-Copolymer) der BASF Aktiengesellschaft, Ludwigshafen, Bundesrepublik Deutschland. Dabei ist maximal 40 µm Versatz noch gerade tolerierbar.

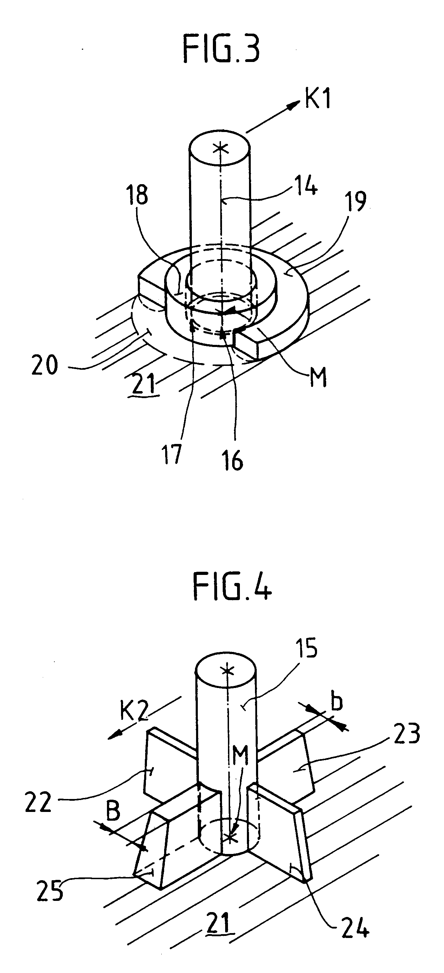

Erfindungsgemäße Beispiele von Achszapfen 14 und 15 sind in Figuren 3 und 4 dargestellt.

In Figur 3 ist um den Fuß 16 des Achszapfens 14 eine schmale Ringnut 17 vorgesehen, die von einem Auflage- oder Laufrend 18 für die Normalrolle (mit durchgehender Lagerbohrung) umgeben ist. Um diesen Laufrend 18 ist eine etwas niedrigere Erhöhung 19 vorgesehen, die etwa rechteckförmigen Querschnitt aber auch andere Querschnittsformen besitzen kann. Die Erhöhung 19 hat eine Bogenlänge entsprechend etwa einem 180°-Winkel. Die Bogenlänge kann Winkeln zwischen etwa 90° und etwa 270° entsprechen und die Mitte der Bogenerhöhung 19 sollte etwa in der Richtung der gewünschten Vertikalausrichtkraft, hier mit K1 bezeichnet, liegen. Die Höhe der Bogenerhöhung 19 über der Innenfläche 21 beträgt beim o.g. Werkstoff etwa 0,2 bis 0,6 mm. Als Kreisringergänzung kann eine Nut 20 an der Innenfläche 21 des Kassettengehäuses 5 vorgesehen sein. Die Nut 20 hat andeutungsweise eine leicht kreisabschnittsförmige Querschnittsform, kann jedoch jede spritztechnisch leicht herstellbare Form aufweisen.

Wie in Figur 3 angedeutet, kann auf die Nut 20 auch ganz verzichtet werden, wodurch der Grad der Materialanhäufungsunterschiede jedoch nicht so groß ist wie mit einer Nut.

In Figur 4 ist ein Achszapfen 15 für eine Hutrolle (nicht dargestellt) gezeigt, bei dem durch Radialrippen 22-24 und 25 sowohl eine stabile Ausführung geschaffen wird, als auch eine gute Vertikal-Ausrichtung gemäß der Erfindung erreichbar ist. Die Rippe 25 ist in der Breite B etwa 2 bis 3 mal so groß ausgebildet wie die Breite b der übrigen schmalen Rippen 22-24. Dadurch wird die Zugkraft K2 aufgebracht, die nach der Herstellung der Kassettengehäuse 5 im Spritzguß durch Abkühlung und Schwund erzeugt wird. Die Gesamtzahl der Rippen sollte wenigstens drei betragen, wobei jeweils die mittlere(n) Rippe(n) das größte Volumen besitzen sollte(n).

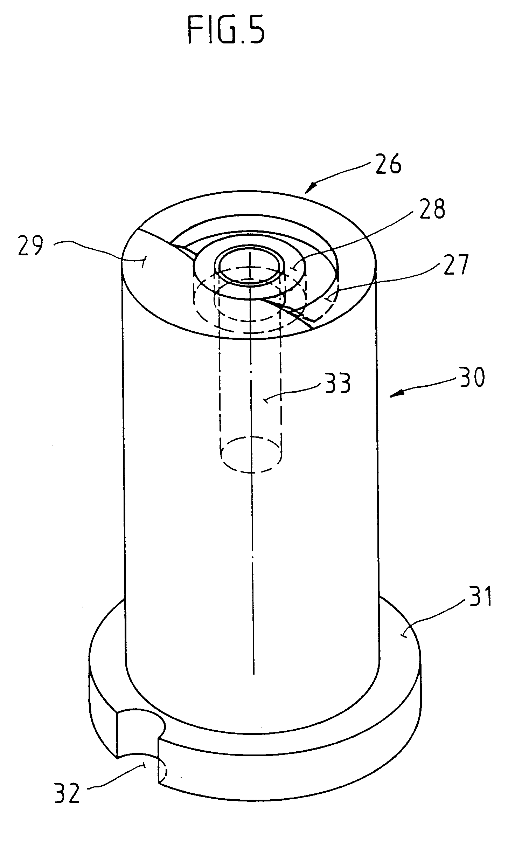

Figur 5 zeigt ein Beispiel für eine Werkzeug-Einsatz-Ausbildung 30 für einen Achszapfen 14 gemäß Figur 3. In der Stirnwand 26 ist hier um die Bohrung 33 eine etwa 180° Ringvertiefung 27 vorgesehen, die der Ausbildung der Bogenerhöhung 19 entspricht. Eine Kreisnut 28 entspricht der Form des Laufrendes 18 und die Wulst-Erhöhung 29 soll der Ausbildung der etwa 180°-Ringnut 20 dienen. Ein Flansch 31 ist am Werkzeug-Einsatz 30 mit einem Einschnitt 32 ausgebildet, der zum Festlegen des Einsatzes 30 im nicht dargestellten Werkzeug nach Drehen um die Längsachse L in einer gewünschten Winkellage (also in optimaler Winkellage) zum herzustellenden Achszapfen 14 dient. Der Einsatz 30 ist somit schon von der Form her drehbar auszubilden.

Besagtes gilt auch für den nun noch zu beschreibenden zweiten Achszapfen-Werkzeug-Einsatz 34. Von der Mittelbohrung 33 erstrecken sich schmale Radialschlitze 35-37 entsprechend den schmalen Radialrippen 22-24 des Achszapfens 15 und der wesentlich breitere Schlitz 38 ist ensprechend der breiten Radialrippe 25 des Achszapfens 15 ausgebildet. Zur besseren Entformung sind die Außenenden der Schlitze 35-38 abgeschrägt ausgeführt. Die Lage und das Volumen der jeweiligen Materialanhäufung zur Achszapfen-Vertikalausrichtung ist auch abhängig vom jeweils verwendeten Kunststoffmaterial und seinem Schwind- oder Schrumpfverhalten beim Spritzgießen.

Mit dem oben angegebenen schlagfesten Polystyrol-Kunstoff konnte der seitliche Versatz a der Achszapfen von 40 bis 50 μm auf 10 bis 20 μm reduziert werden, also auf wenigstens die Hälfte, wodurch sowohl die Ausschußrate bei der Kassettenherstellung als auch die Funktionssicherheit der fertigen Kassette wesentlich erhöht werden konnte.

Die Beschreibung betrifft Achszapfen für Bandführungsrollen oder Umlenkrollen in Audio-Kassetten.

Es ist jedoch für jeden Fachmann zweifelsfrei, daß alle Maßnahmen für jede Art von "Führungszapfen" im weitesten Sinne in jeder Art von Kassetten einsetzbar ist, wobei es um eine möglichst gute Vertikal-Ausrichtung der Zapfen geht.

Immer wenn ein Zapfen an der Innenfläche des Gehäuses angespritzt ist und derselbe wenigstens den Lauf des bewegten Aufzeichnungsträgers mitbestimmt, ist derselbe ein "Führungszapfen".

Solche "Führungszapfen" sind entweder feste Zapfen oder Achs- oder Schwenkzapfen für bewegliche führungselemente wie Führungsrollen, Führungshebel (wie z.B. in der Sicherheitsmechanik SM® in Audio-Cassetten der BASF Aktiengesellschaft benutzt), Führungsfolien, Andruckfolien (z.B. in Videokassetten).

## Patentansprüche

1. Kassette für einen Bandaufzeichnungsträger, insbesondere ein Magnetband, auf wenigstens einem Bandwickel in einem Kunststoff-Gehäuse (5) und mit wenigstens einem an der Innenfläche des Gehäuses (5) angespritzten Zapfen, der den Lauf des Bandaufzeichnungsträgers wenigstens mitbestimmt, dadurch gekennzeichnet, daß um den Fuß des Zapfens (14,15) eine in bezug auf den Mittelpunkt des Zapfenfußes (16) nicht zentral-symmetrisch angeordnete Materialanhäufung (19, 25) vorgesehen ist, zur vorherbestimmbaren Vertikal-Ausrichtung des Zapfens (12, 14, 15) in bezug auf die Innenfläche des Gehäuses (5).

2. Kassette nach Anspruch 1, dadurch gekennzeichnet, daß der wenigstens eine Zapfen ein Achszapfen (12, 14, 15) für eine drehbar gelagerte Bandführungsrolle (7) ist.

3. Kassette nach Anspruch 1 oder 2, dadurch gekennzeichnet, daß die Materialanhäufung als ringsegmentförmige Erhöhung (19) an der Gehäuseinnenfläche (21) ausgebildet ist.

4. Kassette nach Anspruch 1, bei der der Zapfen mit Stützrippen versehen ist, dadurch gekennzeichnet, daß Stützrippen (22-25) mit ungleichem Volumen, insbesondere mit ungleicher Dicke (B,b) ausgebildet sind.

5. Kassette nach Anspruch 4, dadurch gekennzeichnet, daß die Stützrippen als mindestens drei Radialrippen (22-25) ausgebildet sind, wovon die mittlere Rippe (25) die größte Dicke (B) aufweist.

6. Kassette nach Anspruch 3, dadurch gekennzeichnet, daß die ringsegmentförmige Erhöhung (19) im Winkelbereich von etwa 90° bis etwa 270°, insbesondere von etwa 180° um den Fuß (16) des Zapfens (14) angeordnet ist.

7. Kassette nach Anspruch 6, dadurch gekennzeichnet, daß die Ergänzung des Winkelbereichs der Erhöhung (19) als Vertiefung (20) in der Gehäuse-Innenfläche (21) ausgeformt ist.

8. Kassette nach Anspruch 3 oder 6, dadurch gekennzeichnet, daß die Erhöhung (19) über der Innenfläche des Gehäuses eine Höhe zwischen etwa 0,2 und 0,6 mm aufweist.

9. Werkzeug zur Herstellung eines an der Innenfläche eines Gehäuses (5) einer Kassette gemäß Anspruch 1 angespritzten Zapfens (12, 14, 15), wobei ein Werkzeug-Einsatz (30, 34) mit einer Längsbohrung (33) sowie mit wenigstens einer, in der Stirnseite des Werkzeug-Einsatzes ausgebildeten, zum Fußpunkt der Achse (L) der Längsbohrung (33) nicht zentral-symmetrisch angeordneten Ausnehmung bzw. Erhöhung (29), versehen ist und als separates Teil ausgebildet ist, das mit einem radialen Kennzeichnungsmittel (32) versehen ist, so daß durch Fixieren des Werkzeug-Einsatzes (30, 34) in gewünschter Winkellage eine vorherbestimmte Vertikal-Ausrichtung des Zapfens (12, 14, 15) relativ zur Innenfläche des Kassettengehäuses (5) erreichbar ist.

10. Werkzeug nach Anspruch 9, dadurch gekennzeichnet, daß das radiale Kennzeichnungsmittel als radialer Einschnitt (32) ausgebildet ist.

## Claims

1. A cassette for a tape recording medium, in particular a magnetic tape, on one or more tape rolls in a plastic housing (5) and having one or more pegs which are molded as an integral part on the inner surface of the housing (5) and which partly or completely determine the running of the tape recording medium, wherein an accumulation (19, 25) of material arranged non-centrosymmetrically with respect to the mid-point of the peg base (16) is provided around the base of the peg (14,15), for predeterminable vertical alignment of the peg

® bedeutet eingetragenes Warenzeichen der BASF Aktiengesellschaft, Ludwigshafen, Deutschland

(12, 14, 15) with respect to the inner surface of the housing (5).

2. A cassette as claimed in claim 1, wherein the one or more pegs are each a spindle (12, 14, 15) for a rotatably mounted tape guide roller (7).

3. A cassette as claimed in claim 1 or 2, wherein the accumulation of material is in the form of an annular segment-like raised area (19) on the inner surface (21) of the housing.

4. A cassette as claimed in claim 1, in which the peg is provided with support ribs, wherein support ribs (22-25) have unequal volumes, in particular unequal thicknesses (B, b).

5. A cassette as claimed in claim 4, wherein the support ribs are in the form of three or more radial ribs (22-25), the middle rib (25) of which has the greatest thickness (B).

6. A cassette as claimed in claim 3, wherein the annular segment-like raised area (19) is arranged in an angular region of from about 90° to about 270°, in particular from about 180°, around the base (16) of the peg (14).

7. A cassette as claimed in claim 6, wherein the angular range of the raised area (19) is supplemented by forming a recess (20) in the inner surface (21) of the housing.

8. A cassette as claimed in claim 3 or 6, wherein the raised area (19) above the inner surface of the housing has a height of about 0.2-0.6 mm.

9. A mold for the production of a peg (12, 14, 15) which is molded as an integral part on the inner surface of a housing (5) of a cassette as claimed in claim 1, wherein a mold insert (30, 34) is provided with a longitudinal hole (33) and with one or more recesses or raised areas (29), formed in the end wall of the mold insert and arranged non-centrosymmetrically with respect to the base of the axis (L) of the longitudinal hole (33), and is formed as a separate part which is provided with a radial marking means (32) so that, by fixing the mold insert (30, 34) in the desired angular position, a pre-determined vertical alignment of the peg (12, 14, 15) relative to the inner surface of the cassette housing (5) can be achieved.

10. A mold as claimed in claim 9, wherein the radial marking means is in the form of a radial incision (32).

## Revendications

1. Cassette pour un support d'enregistrement en bande, en particulier une bande magnétique, en au moins un enroulement dans un boîtier en matière plastique (5), comportant au moins une tige venue d'injection sur la face intérieure du boîtier (5) qui au moins codétermine la marche du support d'enregistrement en bande, caractérisée par le fait qu'autour du pied (16) de la tige (14,15) est prévue une accumulation de matière (19,25) disposée sans symétrie centrale par rapport au centre de celui-ci pour l'orientation verticale prédéterminable de la tige (12,14,15) par rapport à la face intérieure du boîtier (5).

2. Cassette selon la revendication 1, caractérisée par le fait que la tige est un axe (12,14,15) pour un galet de guidage de la bande, monté tournant (7).

3. Cassette selon l'une des revendications 1 et 2, caractérisée par le fait que l'accumulation de matière est une élévation en forme de segment de couronne (19) formée sur la face intérieure (21) du boîtier.

4. Cassette selon la revendication 1, dans laquelle la tige est pourvue de nervures de soutien, caractérisée par le fait qu'il est formé des nervures de soutien (22 à 25) de volumes différents, en particulier d'épaisseurs différentes (B,b).

5. Cassette selon la revendication 4, caractérisée par le fait que les nervures de soutien sont constituées d'au moins trois nervures radiales (22 à 25), la nervure du milieu (25) ayant la plus grande épaisseur (B).

6. Cassette selon la revendication 3, caractérisée par le fait que l'élévation en forme de segment de couronne (19) est placée dans le domaine angulaire d'environ 90 degrés à environ 270 degrés, en particulier d'environ 180 degrés, autour du pied (16) de la tige (14).

7. Cassette selon la revendication 6, caractérisée par le fait que le complément du domaine angulaire de l'élévation (19) est formé d'un creux (20) dans la face intérieure (21) du boîtier.

8. Cassette selon l'une des revendications 3 et 6, caractérisée par le fait que l'élévation (19) a audessus de la face intérieure du boîtier une hauteur comprise entre environ 0,2 et 0,6 mm.

9. Outil pour la réalisation d'une tige (12,14,15) venue d'injection sur la face intérieure du boîtier (5) d'une cassette selon la revendication 1, un chassis d'outil (30,34) étant pourvu d'un trou longitudinal (33) et d'au moins un évidement ou une élévation (29) formée dans sa face frontale et n'ayant pas une symétrie centrale par rapport au pied de l'axe (L) du trou longitudinal (33) et étant formé comme élément séparé qui est pourvu d'un moyen radial de repérage (32), de sorte qu'en fixant ce chassis d'outil (30,34) en position angulaire désirée, on peut obtenir une orientation verticale prédéterminée de la tige (12,14,15) par rapport à la face intérieure du boîtier (5) de cassette.

10. Outil selon la revendication 9, caractérisé par le fait que le moyen radial de repérage est une encoche radiale (32).

# FIG.1

13          5

8

10

11

α          α

7A          7B

6

A

Stand der Technik

# FIG.2

a

12          12

5A

# FIG.3

# FIG.4

# FIG.5

# FIG.6